**Europäisches Patentamt**

**European Patent Office**

**Office européen des brevets**

(11) Veröffentlichungsnummer: **0 120 394**
**B1**

## (12) EUROPÄISCHE PATENTSCHRIFT

(45) Veröffentlichungstag der Patentschrift:
18.01.89

(21) Anmeldenummer: **84102701.4**

(22) Anmeldetag: **13.03.84**

(51) Int. Cl.⁴: **C 08 L 69/00** // C08L67/02

(54) Polycarbonat-Hohlkammerplatten mit verbessertem Brandverhalten.

(30) Priorität: 25.03.83 DE 3310952
30.11.83 DE 3343255

(43) Veröffentlichungstag der Anmeldung:
03.10.84 Patentblatt 84/40

(45) Bekanntmachung des Hinweises auf die Patenterteilung:
18.01.89 Patentblatt 89/3

(84) Benannte Vertragsstaaten:
DE FR GB IT

(56) Entgegenhaltungen:
EP-A- 0 054 856
BE-A- 694 326
DE-A- 2 750 062
US-A- 4 061 691
US-A- 4 188 314
US-A- 4 391 954

JOURNAL OF APPLIED POLYMER SCIENCE, Band 22,
Nr. 8, August 1978, Seiten 2155-2164, John Wiley & Sons,
Inc., New York, USA; D.C. WAHRMUND et al.:
"Polyester-polycarbonate blends. I. Poly(butylene
terephthalate)"
JOURNAL OF APPLIED POLYMER SCIENCE, Band 23,
Nr. 1, Januar 1979, Seiten 85-99, John Wiley & Sons, Inc.,
New York, USA; T.R. NASSAR et al.:
"Polyester-polycarbonate blends. II. Poly(ethylene
terephthalate)"
JOURNAL OF APPLIED POLYMER SCIENCE, Band 23,

(73) Patentinhaber: BAYER AG, Konzernverwaltung RP
Patentabteilung, D-5090 Leverkusen 1 Bayerwerk (DE)

(72) Erfinder: Krishnan, Sivaram, Dr., 1653 Little Meadow
Road, Pittsburgh, PA 15241 (US)
Erfinder: Neuray, Dieter, Dr., 1822 Tragone Drive,
Pittsburgh, PA 15241 (US)
Erfinder: Cohnen, Wolfgang, Dr., Heymannstrasse 36,
D-5090 Leverkusen 1 (DE)
Erfinder: Müller, Peter Rolf, Dr., Paul-Klee-Strasse 76,
D-5090 Leverkusen 1 (DE)
Erfinder: Kress, Hans Jürgen, Dr., Scheiblerstrasse 111,
D-4150 Krefeld 1 (DE)

(56) Entgegenhaltungen: (Fortsetzung)
Nr. 2, Januar 1979, Seiten 575-587, John Wiley & Sons,
Inc., New York, USA; R.N. MOHN et al.:
"Polyester-polycarbonate blends. III. Polyesters based
on 1,4-cyclohexanedimethanol/terephthalic
acid/isophthalic acid"
JOURNAL OF APPLIED POLYMER SCIENCE, Band 26,
Nr. 12, Dezember 1981, Seiten 4233-4245, John Wiley &
Sons, Inc., New York, USA; W.A. SMITH et al.:
"Chemistry of miscible polycarbonate-copolyester
blends"
CHEMICAL ABSTRACTS, Band 86, Nr. 4, 24. Januar
1977, Seite 42, Nr. 17580n, Columbus, Ohio, USA; & JP -
A - 76 102 043 (TEIJIN, LTD.) 09.09.1976

Die Akte enthält technische Angaben, die nach dem
Eingang der Anmeldung eingereicht wurden und die
nicht in dieser Patentschrift enthalten sind.

**Beschreibung**

Polycarbonate auf Basis Bisphenol-A besitzen ausgezeichnete physikalische Eigenschaften, wie z.B. Transparenz, Schlagzähigkeit, Wärmeformbeständigkeit, Schwerentflammbarkeit, gute Verarbeitbarkeit aus der Schmelze, z.B. durch Spritzguss und Extrusion.

Durch Extrusion aus Bisphenol-A-Polycarbonat hergestellte massive Platten von 1 bis 10 mm Dikke werden z.B. als Wandverkleidung, Dachbekleidung, Lichtkuppel, Balkonverkleidung, bruchsichere Verscheibung in Schulen, Kindergärten und Sporthallen, eingesetzt.

Ebenso werden extrudierte Hohlprofile aus Polycarbonat auf Basis Bisphenol A auf vielen Anwendungsgebieten benutzt.

Formteile aus Bisphenol A-Polycarbonat sind schwer entflammbar, bereits ohne spezielle flammhemmende Additive wird die Klassifizierung V 2 gemäss Underwriters Laboratories Subject 94 erzielt.

Mit flammhemmdenden Additiven oder Halogenadditiven oder Antidrippingmitteln wird die Klassifizierung VO nach UL Subject 94 erzielt.

Die für die Bundesrepublik Deutschland verbindliche Norm DIN 4102 teilt die Baustoffe nach ihrem Brandverhalten in folgende Klassen ein:

Baustoffklasse A        nicht brennbar
Baustoffklasse B1       schwer entflammbar
Baustoffklasse B2       normal entflammbar
Baustoffklasse B3       leicht entflammbar.

Brennbare Baustoffe der Gruppe B werden darum in die Klasse B1 eingestuft, wenn sie die Prüfung im Brandschacht bestehen; nur solche Baustoffe sind zugelassen.

Es hat sich nun gezeigt, dass Hohlkammerplatten aus Polycarbonaten auf Basis von Bisphenol-A mit einem Gehalt an Polybutylenterephthalat in Mengen von 1 bis 5 Gew.-% ein verbessertes Brandverhalten gegenüber Hohlkammerplatten, die nur aus linearem oder verzweigtem Bisphenol-A-Polycarbonat bestehen, besitzen, wobei dieses verbesserte Brandverhalten auch nach Bewitterung noch erhalten bleibt. Eine Möglichkeit, dies zu testen, ist der oben genannte Brandschachttest nach DIN 4102, wobei insbesondere bei Hohlkammerplattendicken von 16 mm der Unterschied augenfällig wird. Auch gegenüber Massivplatten einer Dicke von etwa 4 bis 12 mm, die entweder aus reinem Bisphenol-A-Polycarbonat oder aus dessen Gemisch mit 1 bis 5 Gew.-% Polybutylenterephthalat bestehen, ergeben sich Unterschiede im Brandverhalten, welches wiederum im oben genannten Brandschachttest nach DIN 4102 sichtbar gemacht werden kann.

Gegenstand der vorliegenden Erfindung sind somit Hohlkammerplatten einer Dicke von 8 bis 16 mm bestehend aus

A) 99 bis 95 Gew.-% hochmolekularem aromatischem Polycarbonat auf Basis von 80 bis 100 Mol-% Bisphenol-A und 20 bis 0 Mol-% 2,2-Bis-(3,5-dimethyl-4-hydroxyphenyl)-propen und/oder 1,1-Bis-(4-hydroxyphenyl)-cyclohexan, welches in bekannter Weise durch den Einbau geringer Mengen von drei- oder mehr als dreifunktionellen Verbindungen verzweigt sein kann, und

B) 1 bis 5 Gew.-% Polybutylenterephthalat.

In einer speziellen Ausführungsform haben die erfindungsgemässen Hohlkammerplatten eine Dicke von 16 mm.

In einer anderen speziellen Ausführungsform wird als Polycarbonatkomponente A) ein Polycarbonat auf Basis 100 Mol-% Bisphenol-A verwendet.

Die erfindungsgemässen Hohlkammerplatten besitzen neben ihrem verbesserten Brandverhalten, ausgezeichnete Transparenz und einen niedrigen Yellowness-Index.

Aus der EP-A 0 054 856 sind Hohlkammerplatten bekannt, jedoch nicht aus den erfindungsgemäss einzusetzenden Polycarbonat-Polybutylenterephthalat-Gemischen. Über das Brandverhalten von Hohlkammerplatten wird in der EP-A 0 054 856 nichts ausgeführt.

Aus der US-Patentschrift Nr. 4 188 314 sind Platten aus Polycarbonat-Polyester-Gemischen bekannt, wobei spezielle Polyester aus Cyclohexandimethanol und einem Gemisch aus Iso- und Terephthalsäure verwendet werden.

Artikel aus den geschützten Gemischen des US-Patents 4 188 314 werden als im wesentlichen transparent beschrieben, über die Brennbarkeit bzw. über das Brandverhalten dieser Platten, wird nichts ausgeführt.

In Spalte 1 des US-Patents 4 188 314 wird jedoch auf unser US-Patent 4 061 691 verwiesen, worin flammwidrige Polycarbonatmischugen mit einem Gehalt an Polyesterfasern in Mengen von 0,5 bis 20%, vorzugsweise 1 bis 5 Gew.-% beansprucht sind. Als Polyester ist auch Polybutylenterephthalat genannt. Der Zusatz der Polyesterfasern verursacht jedoch Trübung der im US-Patent 4 061 691 beanspruchten Mischungen, wie auch im US-Patent 4 188 314, Spalte 1 , Zeile 50 bestätigt wird.

Hohlkammerplatten werden der im US-Patent 4 188 314, noch im US-Patent 4 061 691 angesprochen.

Somit beruht der Gegenstand der vorliegenden Erfindung auf einer erfinderischen Tätigkeit gegenüber dem vorstehend diskutierten nächstliegenden Stand der Technik.

Hochmolekulare aromatische Polycarbonate im Sinne der Erfindung sind Homopolycarbonate auf Basis von Bisphenol-A[2,2-Bis(4-hydroxyphenyl)-propan] oder Copolycarbonate aus Bisphenol-A mit bis zu 20 Gew.% 2,2-Bis-(3,5-dimethyl-4-hydroxyphenyl)-propan und/oder 1,1-Bis-(4-hydroxyphenyl)-cyclohexan, oder Mischungen von BPA-Polycarbonaten mit anderen Copolycarbonaten, wobei in den Copolycarbonaten neben Bisphenol-A bis zu 20 Mol.% 2,2-Bis-(3,5-dimethyl-4-hydroxyphenyl)-propan und/oder 1,1-Bis-(4-Hydroxyphenyl)-cyclohexan enthalten sein können.

Besonders bevorzugt sind Polycarbonate allein auf Basis von 2,2-Bis-(4-hydroxyphenyl)-propan oder Copolycarbonate mit bis zu 5 Gew.% der obengenannten beiden anderen Diphenole.

Die aromatischen Polycarbonate können nach bekannten Verfahren hergestellt werden, so z.B. nach dem Schmelzumesterungsverfahren aus Bisphenol A und Diphenylcarbonat und dem Zweiphasengrenzflächenverfahren aus Bisphenolen und Phosgen, wie es in der Literatur beschrieben ist.

Die aromatischen Polycarbonate sollten eine relative Lösungsviskosität in $CH_2Cl_2$ bis 25°C und einer Konzentration von 0,5 g/100 ml vom 1,26 bis 1,35 haben.

Die aromatischen Polycarbonate können in bekannter Weise durch den Einbau geringer Mengen, vorzugsweise von Mengen zwischen 0,05 und 2,0 Mol.-% (bezogen auf eingesetzte Diphenole), an drei- oder mehr als dreifunktionellen Verbindungen, insbesondere solchen mit drei oder mehr als drei phenolischen Hydroxygruppen, verzweigt sein.

Polycarbonate dieser Art sind z.B. in den deutschen Offenlegungsschriften 1 570 533, 1 595 762, der britischen Patentschrift 1 079 821, der US-Patentschrift Re 27 682 und in dem deutschen Patent 2 500 092 beschrieben.

Einige der verwendbaren Verbindungen mit drei oder mehr als drei phenolischen Hydroxygruppen sind beispielsweise
2,4-Bis-(hydroxyphenyl-isopropyl)-phenol,
2,6-Bis-(2′-hydroxy-5′-methyl-benzyl)-4-methylphenol,
2-(4-Hydroxyphenyl)-2-(2,4-dihydroxypenyl)-
    propan und
1,4-Bis-(4,4″-dihydroxytriphenyl-methyl)-benzol.

Einige der sonstigen dreifunktionellen Verbindungen sind
2,4-Dihydroxybenzoesäure, Trimesinsäure,
Cyanurchlorid und
3,3-Bis(4-hydroxy-3-methyl-phenyl)2-oxo-2,3-
    dihydroindol (Insatin-bis-kresol).

Polyester im Sinne der Erfindung sind Polyester aus Terephthalsäure und Butandiol-1,4.

Die Polybutylenterephthalate können nach bekannten Verfahren beispielsweise aus Terephthalsäuredialkylester und Butandiol-1,4 durch Umesterung erhalten werden (siehe z.B. US-Patente 2 647 885, 2 643 989, 2 534 028, 2 578 660, 2 742 494, 2 901 466). Zur Herstellung geht man beispielsweise von einem niederen Alkylester der Terephthalsäure, vorzugsweise dem Dimethylester, aus und estert diesen mit einem Überschuss an Diol in Gegenwart geeigneter Katalysatoren zum Bishydroxyalkylester der Terephthalsäure um. Dabei wird die Temperatur ausgehend von 140°C auf 210–220°C erhöht. Der freigesetzte Alkohol wird abdestilliert. Die Aufkondensation erfolgt anschliessend bei Temperaturen von 210–280°C, der Druck wird dabei stufenweise bis auf weniger als 1 Torr erniedrigt, wobei das überschüssige Diol abdestilliert wird.

Die Molekulargewichte $\bar{M}_w$ der Terephthalate liegen zwischen 30 000 und 80 000. Die Bestimmung des $\bar{M}_w$ erfolgt durch Messung der intrinsic-Viskosität (Grenzviskositätszahl, auf Konzentration 0 extrapolierter Wert der reduzierten spezifischen Viskosität) – I.V – in Phenol/o-Dichlorbenzol (1/1) bei 25°C als 5%ige Lösung, bzw. über den RSV-Wert (reduzierte spezifische Viskosität), wobei es sich hierbei um den durch die Konzentration der gemessenen Lösung dividierten Betrag der spezifischen Viskosität handelt. Die Bestimmung des RSV-Wertes wird in Phenol/Tetrachlorethan (60/40) bei 20°C mit einer 23%igen Lösung vorgenommen.

Besonders bevorzugte aliphatische thermoplastische Polyester sind Polybutylenterephthalate mit $\bar{M}_w$ zwischen 30 000 und 60 000.

Die Polycarbonat/Polybutylenterephthalat-Mischungen dieser Erfindung können ausserdem Thermo-Stabilisatoren, Antioxydantien, UV-Stabilisatoren, Fliess- und Entformungshilfsmittel enthalten.

Die Brandschachtprüfung nach DIN 4102 sieht folgende Bedingungen vor:
4 Proben der Abmessungen 19 cm × 100 cm × Originaldicke werden senkrecht und zueinander rechtwinkling angeordnet. Nach 10-minütiger Beflammung mit einem Ringbrenner wird der Brenner abgeschaltet. Der Brandschachttest gilt als bestanden, wenn
– Der Mittelwert der Restlängen mindestens 150 mm beträgt und keine Probe vollständig verbrennt (Restlänge 0 mm),
– die mittlere Rauchgastemperatur 200°C nicht überschreitet.

Vor der Prüfung werden die Formteile in Normklima gelagert, bis sie gewichtskonstant sind. Die Prüfung erfolgt jeweils vor der Aussenbewitterung und bis zu fünfjähriger Aussenbewitterung im mitteleuropäischen Klima. Bei der Aussenbewitterung werden die Prüfkörper nach Süden ausgerichtet und bilden mit der Erdoberfläche einen Winkel von 45°.

Die Granulate von Polycarbonat und Polyester werden gemischt und können sowohl direkt auf einem Extruder zu Platten verarbeitet werden als auch nach vorgeschalteter Homogenisierung auf einem Extruder und anschliessender Granulierung.

**Patentansprüche**

1. Hohlkammerplatten einer Dicke von 8 bis 16 mm bestehend aus
A) 99 bis 95 Gew.-% hochmolekularem aromatischem Polycarbonat auf Basis von 80 bis 100 Mol-% Bisphenol-A und 20 bis 0 Mol-% 2,2-Bis-(3,5-dimethyl-4-hydroxyphenyl)-propan und/oder 1,1-Bis-(4-hydroxyphenyl)-cyclohexan, welches in bekannter Weise durch den Einbau geringer Mengen an drei- oder mehr als dreifunktionellen Verbindungen verzweigt sein kann, und
B) 1 bis 5 Gew.-% Polybutylenterephthalat.

2. Hohlkammerplatten gemäss Anspruch 1, dadurch gekennzeichnet, dass sie eine Dicke von 16 mm haben.

3. Hohlkammerplatten gemäss Ansprüchen 1 und 2, dadurch gekennzeichnet, dass ein aromatisches Polycarbonat auf Bais 100 Mol-% Bisphenol-A verwendet wird.

## Claims

1. Hollow boards having a thickness of from 8 to 16 mm, consisting of

A) from 99 to 95% by weight of high molecular weight aromatic polycarbonate based on 80 to 100 mol.-% of bisphenol-A and 20 to 0 mol.-% of 2,2-bis-(3,5-dimethyl-4-hydroxyphenyl)-propane and/or 1,1-bis-(4-hydroxyphenyl)-cyclohexane which may be branched in known manner by the incorporation of small quantities of trifunctional or higher than trifunctional compounds and

B) from 1 to 5% by weight of polybutylene terephthalate.

2. Hollow boards according to claim 1, characterised in that they have a thickness of 16 mm.

3. Hollow boards according to claims 1 and 2, characterised in that an aromatic polycarbonate based on 100 mol.-% of bisphenol-A is used.

## Revendications

1. Plaques creuses d'une épaisseur de 8 à 16 mm consistant en

A) 99 à 95% de polycarbonate aromatique de haut poids moléculaire à base de 80 à 100 mol% de bisphénol A et 20 à 0 mol% de 2,2-bis-(3,5-diméthyl-4-hydroxyphényl)-propane et/ou de 1,1-bis-(4-hydroxyphényl)-cyclohexane, qui peut être ramifié de manière connue par l'incorporation de faibles quantités de composés trifonctionnels ou plus que trifonctionnels, et

B) 1 à 5% en poids de polytéréphtalate de butylène.

2. Plaques creuses selon la revendication 1, caractérisées en ce qu'elles ont une épaisseur de 16 mm.

3. Plaques creuses selon les revendications 1 et 2, caractérisées en ce que l'on utilise un polycarbonate aromatique à base de 100 mol% de bisphénol A.